# EUROPÄISCHE PATENTSCHRIFT

(11) **EP 0 926 478 B1**
(45) Veröffentlichungstag und Bekanntmachung des Hinweises auf die Patenterteilung: **01.12.2004**
(21) Anmeldenummer: 98121090.9
(22) Anmeldetag: 06.11.1998
(51) Int. Cl.: G01J 5/10, G01J 5/42, B60H 1/00

(54) **Sensor zur Erfassung der Sonneneinstrahlung**
Sensor for assessing solar irradiation
Capteur pour déterminer l' irradiation solaire

(30) Priorität: 05.12.1997 DE 19753884
(43) Veröffentlichungstag der Anmeldung: 30.06.1999
(73) Patentinhaber: Behr GmbH & Co., 70469 Stuttgart (DE)
(72) Erfinder: Lochmar, Karl, Dipl.-Ing., 71665 Vaihingen/Enz (DE); Baruschke, Wilhelm, Dipl.-Ing., 73117 Wangen (DE); Käfer, Oliver, Dipl.-Ing., 71711 Murr (DE)

(56) Entgegenhaltungen:
- EP-A- 0 304 664
- DE-A- 3 821 743
- FR-A- 2 416 457

## Beschreibung

Die Erfindung betrifft einen Sensor zur Erfassung der Richtung und Intensität der Sonneneinstrahlung, insbesondere für die Steuerung einer Klimaanlage, gemäß dem Oberbegriff des Anspruchs 1.

Derartige Sensoren zur Erfassung der Sonneneinstrahlung in den Fahrzeuginnenraum eines Kraftfahrzeugs werden zur Regelung einer Klimaanlage eingesetzt, um die Temperaturerhöhung des Fahrzeuginnenraums durch die einstrahlende Sonneneinstrahlung zu kompensieren. Um die Fahrzeuginnneraumtemperatur mit Hilfe der Klimaanlage genau regeln zu können, muß mit Hilfe des Sensors die durch die Sonneneinstrahlung bewirkte Aufheizung des Fahrgastinnenraums ermittelt werden. Da die Sensorelemente die Lichteinstrahlung in unterschiedlichen Richtungen erfassen, kann der Klimaanlage ein entsprechendes individuelles Meßsignal zugeführt werden, um die Temperatur in dem Fahrzeuginnenraum an bestimmten Orten unterschiedlich zu regeln. So ist es beispielsweise möglich, auf der Fahrer- und der Beifahrerseite und/oder auf den Vorder- bzw. Rücksitzen eine unterschiedliche und den individuellen Wünschen der Fahrzeuginsassen angepaßte Klimatisierung zu erreichen.

Aus der DE 38 21 743 ist ein derartiger Sensor bekannt mit zwei, jeweils der linken bzw. der rechten Fahrzeugseite zugeordneten Fotodioden, die jeweils auf einer Fläche des Sensors angeordnet sind, deren Oberflächen von der linken bzw. rechten Fahrzeugseite einstrahlenden Sonneneinstrahlung beaufschlagbar sind. Dadurch kann die Richtung der Sonneneinstrahlung bestimmt werden. Weiter ist in der Mitte zwischen den beiden Fotodioden ein Temperatursensor vorgesehen, der aufgrund seiner mittigen Anordnung stets von der Sonneneinstrahlung beaufschlagt ist. Dadurch kann die Wärmeeinstrahlung erfaßt werden und ein Temperaturgang der Fotodioden kompensiert werden. Nachteilig an diesem bekannten Sensor ist, daß er relativ aufwendig und kompliziert ausgebildet und deshalb kostenungünstig ist. Die Auswertung der Fotodiodensignale ist relativ aufwendig. Darüberhinaus altern Fotodioden und eine Dauerbelastung durch Sonneneinstrahlung wirkt sich negativ aus.

Ausgehend von diesem Stand der Technik ist es Aufgabe der Erfindung, einen verbesserten Sensor bereitzustellen, der die genannten Nachteile vermeidet und insbesondere kostengünstig ist und in einfacher Weise in ein Fahrzeug zur Regelung einer Klimaanlage einbaubar ist.

Diese Aufgabe wird erfindungsgemäß gelöst durch einen gattungsgemäßen Sensor mit den kennzeichnenden Merkmalen des Anspruchs 1.

Erfindungsgemäß sind die Sensorelemente als Temperatursensoren ausgebildet und stehen jeweils mit ihrer zugeordneten Oberfläche, die die auf sie eintreffende Sonneneinstrahlung - zumindest größtenteils - absorbiert, in wärmeleitender Verbindung. Auf diese Weise kann zum einen die Richtung der Sonneneinstrahlung durch die ansich bekannte Anordnung zweier Sensorelemente bestimmt werden, in dem nämlich durch die von einer Seite einstrahlende Sonneneinstrahlung eine Temperaturdifferenz zwischen den von den beiden Temperatursensoren gemessenen Temperaturen entsteht. Zum anderen kann die Intensität der Sonneneinstrahlung - zumindest qualitativ - durch die Temperatursensoren bestimmt werden, indem diese die Temperatur der die Sonneneinstrahlung absorbierenden Oberfläche messen. Auf den Einsatz von Fotodioden kann somit verzichtet werden, wodurch der erfindungsgemäße Sensor kostengünstig ist. Auch sind Dauerbelastungen des erfindungsgemäßen Sensors unkritisch. Eine Schutzbeschaltung der Sensorelemente des erfindungsgemäßen Sensors ist nicht notwendig.

Das Messen der Temperatur einer das Licht - zumindest größtenteils - absorbierender Oberfläche bietet den besonderen Vorteil, daß diese gemessene Temperatur auch dem Empfinden der Sonneneinstrahlungswirkung auf einen Fahrzeuginsassen entspricht, so daß die gemessenen Temperatursignale unmittelbar der Klimaanlagenregelung zugeführt werden können und einfach auszuwerten sind. So bedarf es keiner aufwendigen Regelungstechnik, um beispielsweise zwischen angenehm wärmender Wintersonne und unangenehm heizender Sommersonne zu unterscheiden.

Bevorzugt sind die Oberflächen geschwärzt und die Temperatursensoren jeweils auf ihre Oberfläche aufgebracht. In kostengünstiger Weise können die Temperatursensoren beispielsweise aufgeklebt sein.

In einer vorteilhaften Ausgestaltung der Erfindung kann mit dem erfindungsgemäßen Sensor zusätzlich die Fahrzeuginnenraumtemperatur gemessen werden, indem der Sensor eine weitere, dritte Fläche aufweist, deren Oberfläche dem Fahrzeuginnenraum zugewandt und somit der Sonneneinstrahlung nicht ausgesetzt ist und auf der ein weiterer Temperatursensor angeordnet ist.

Damit die von diesem Temperatursensor gemessene Temperatur nicht verfälscht wird, ist die dritte Fläche reflektierend ausgebildet.

In einer konstruktiv einfachen Ausgestaltung der Erfindung sind die Flächen in Form einer dreiseitigen Pyramide angeordnet.

Ein weiterer Gegenstand der Erfindung ist eine Instrumententafel, in die der Sensor integriert ist und bei dem die Oberflächen des Sensors Teil der Instrumententafeloberfläche bilden.

Auf diese Weise kann ein erfindungsgemäßer Sensor beispielsweise dadurch hergestellt werden, daß die Instrumententafel eine entsprechende Form aufweist, beispielsweise eine Erhebung in Form einer dreiseitigen Pyramide oder eine entsprechende Versenkung, wobei Temperatursensoren auf den jeweiligen Flächen dieser Pyramide, die Teil der Instrumententafel bilden, aufgebracht sind. Dabei müßte bei der Auswertung der von den einzelnen Temperatursensoren gemessenen Temperaturen eine eventuelle Wärmeleitfähigkeit des Materials der Instrumententafel berücksichtigt werden.

Im folgenden wird die Erfindung anhand von Ausführungsbeispielen unter Bezugnahme auf die Zeichnung im einzelnen erläutert.

In der Zeichnung zeigen:
- **Fig. 1**: eine perspektivische Ansicht eines erfindungsgemäßen Sensors;
- **Fig. 2**: eine Draufsicht des Sensors aus Fig. 1;
- **Fig. 3**: eine Seitenansicht des Sensors aus Fig. 1;
- **Fig. 4** und **Fig. 5**: Darstellungen wie die Fig. 1 und 2 eines zweiten Ausführungsbeispiels;
- **Fig. 6**: eine Seitenansicht des zweiten Ausführungsbeispiels.

Ein in der Zeichnung dargestellter Sensor 10 weist zwei Flächen 12 und 14 auf, die in einem Winkel α zueinander derart angeordnet sind, daß die eine Fläche 12 der linken bzw. rechten Fahrzeugseite und die andere Fläche 14 der anderen Fahrzeugseite zugeordnet ist. Jede Fläche 12 und 14 weist eine Oberfläche 16 und 18 auf, die jeweils in einem Bereich 20 und 22 geschwärzt sind. In den geschwärzten Bereichen 20 und 22 sind Temperatursensoren 24 und 26 angeordnet, beispielsweise aufgeklebt. Auf einer dem Fahrzeuginnenraum zugewandten Seite des Sensors 10 ist eine dritte Fläche 30 mit einer Oberfläche 32 vorgesehen, die bevorzugt in einem Bereich 34 reflektierend ausgebildet ist und die in diesem Bereich 34 einen Temperatursensor 36 aufweist.

Die Flächen 12, 14 und 30 sind bevorzugt in Form einer dreiseitigen Pyramide angeordnet, derart, daß die dritte Fläche 30 dem Fahrzeuginnenraum zugewandt ist und die ersten und zweiten Flächen 12 und 14 von der - beispielsweise durch eine Windschutzscheibe des Fahrzeugs - einfallenden Sonneneinstrahlung beaufschlagbar sind. Der erfindungsgemäße Sensor 10 kann beispielsweise auf einer Instrumententafel 40 eines Kraftfahrzeugs angeordnet sein, wobei eine die Flächen 12 und 14 verbindende Kante 42 dann in Fahrtrichtung 44 gerichtet ist. Bei einer derartigen Anordnung der Flächen 12, 14 und 30 ist der Temperatursensor 36 stets dem Innneraum zugewandt und daher nicht der Sonneneinstrahlung ausgesetzt, so daß dieser Temperatursensor 36 die Fahrzeuginnenraumtemperatur mißt.

Bei einer Sonneneinstrahlung, beispielsweise aus der mit den Pfeilen 46 und 48 gekennzeichneten Richtung, wird die Sonneneinstrahlung in dem Oberflächenbereich 22 absorbiert und der Temperatursensor 26 mißt eine höhere Temperatur als der Temperatursensor 24, so daß mit der Temperaturdifferenz zwischen den Temperaturen, die die Temperatursensoren 24 und 26 messen, die Richtung der Sonneneinstrahlung in etwa bestimmt werden kann. Durch Vergleichen der Temperaturen, die einerseits mit dem Temperatursensor 26 und andererseits mit dem Temperatursensor 36 gemessen wurden, kann - zumindest qualitativ - die Intensität der Sonneneinstrahlung beurteilt werden. Also insbesondere die für die Klimatisierung des Fahrzeugsinnenraums relevante Wärmeeinstrahlung der Sonne kann bestimmt werden. Das Entsprechende gilt selbstverständlich bei einer Sonneneinstrahlung aus der mit Pfeilen 50 und 52 gekennzeichneten Richtung.

Selbstverständlich könnte der erfindungsgemäße Sensor auch beispielsweise auf einer Hutablage angeordnet sein, wobei dann die Kante 42 dem Heck des Fahrzeugs zugewandt ist, so daß mittels des Sensors die von hinten auf das Fahrzeug von der linken oder rechten Seite einstrahlende Sonneneinstrahlung meßbar ist, so daß mit den Signalen eines so angeordneten Sensors 10 beispielsweise eine Klimatisierung des Fondraums verbessert regelbar ist.

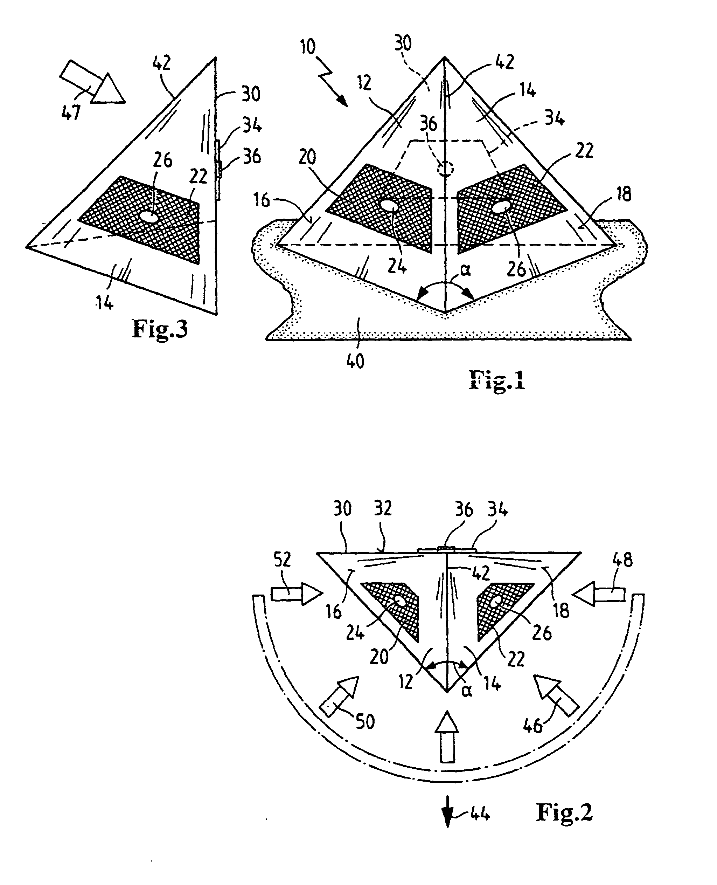

In dem Ausführungsbeispiel nach den **Fig. 1** bis **Fig. 3** ist der erfindungsgemäße Sensor pyramidenartig ausgebildet und kann als separates Bauteil beispielsweise auf der Instrumententafel 40 oder auf der Hutablage in der beschriebenen Weise angeordnet sein. In einer anderen Ausführungsform der Erfindung ist der Sensor 10 integraler Bestandteil der Instrumententafel 40, so daß die Oberflächen 12, 14 und 30 des Sensors 10 Teil der Instrumententafeloberfläche bilden. Dies stellt eine besonders kostengünstige Lösung dar, da der Sensor 10 bereits bei der Herstellung der Instrumententafel 40 ohne Mehraufwand mithergestellt wird.

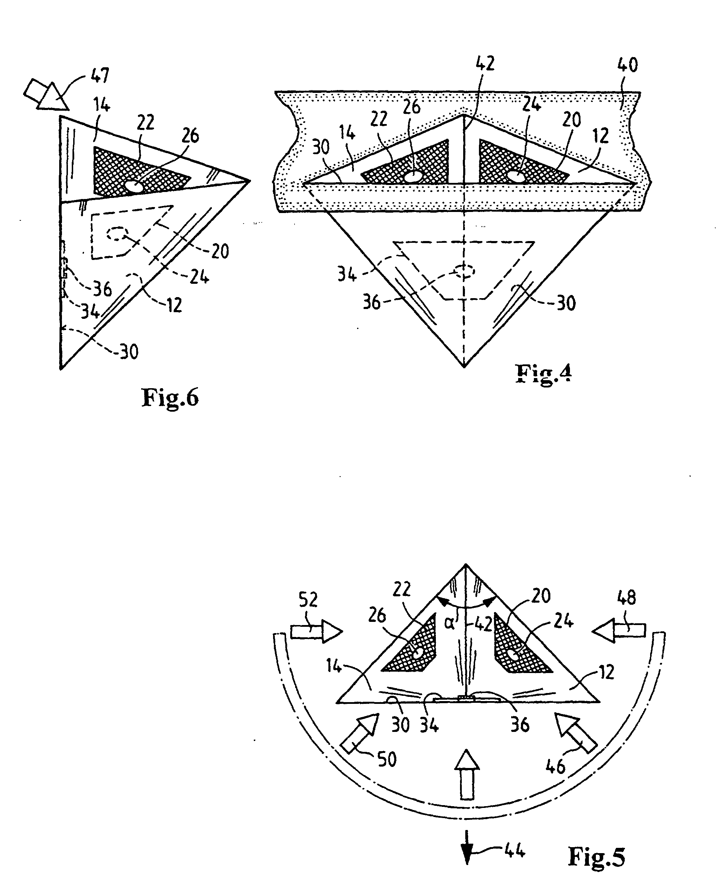

In einem zweiten, in den **Fig. 4** bis **Fig. 6** dargestellten Ausführungsbeispiel ist der erfindungsgemäße Sensor konkav ausgebildet und gegenüber dem Ausführungsbeispiels nach den Fig. 1 bis 3 gewissermaßen nach innen in die Instrumententafel 40 eingestülpt und um 180° verdreht. Die Flächen 12, 14 und 30 bilden dann eine pyramidenförmige Vertiefung in der Instrumententafel. Auch in diesem Fall ist der dritte Temperatursensor 36 dem Fahrzeuginnenraum zugewandt und von der Sonneneinstrahlung nicht beaufschlagbar. Der Temperatursensor 26 auf der Fläche 14 ist wiederum von der aus den Richtungen 46 und 48 in den Sensor, also die pyramidenförmige Vertiefung, einstrahlenden Sonneneinstrahlung beaufschlagbar, wie dies in den **Fig. 5** und **Fig. 6** dargestellt ist. Gleiches gilt selbstverständlich für den Temperatursensor 24.

Diese Ausführungsform des erfindungsgemäßen Sensors 10 hat den Vorteil, daß der Sensor 10 nicht über die Instrumententafel 40 hinaussteht und somit beispielsweise die Sicht des Fahres nicht behindert oder die Instrumententafel 40 beispielsweise weiterhin als Ablage benutzt werden kann.

## Patentansprüche

1. Anordnung zur Erfassung der Richtung und Intensität der Sonneneinstrahlung (Pfeile 46, 48, 50, 52) zur Steuerung einer Klimaanlage eines Fahrzeugs, mit wenigstens zwei jeweils der linken bzw. rechten Fahrzeugseite zugeordneten Flächen und Sensorelementen (24 und 26), die jeweils auf einer der Flächen (12 bzw. 14) angeordnet sind, wobei die Oberflächen (16 bzw. 18) der Flächen (12 bzw. 14) zumindest teilweise von der jeweils von der linken bzw. rechten Fahrzeugseite einstrahlenden Sonneneinstrahlung (46, 48 bzw. 50, 52) beaufschlagbar sind, **dadurch gekennzeichnet, daß** die Sensorelemente (24 und 26) als Temperatursensoren (24 und 26) ausgebildet sind und jeweils mit den ihnen zugeordneten Oberflächen (16,18) der Flächen (12, 14), die die auf sie eintreffende Sonneneinstrahlung (46, 48 bzw. 50, 52) zumindest größtenteils absorbieren, in wärmeleitender Verbindung stehen, so daß die Temperatursensoren die Temperaturen der die Sonneneinstrahlung absorbierenden Oberflächen messen.

2. Anordnung nach Anspruch 1, **dadurch gekennzeichnet, daß** die Oberflächen (16 und 18) zumindest in einem Bereich (20 bzw. 22) geschwärzt sind und die Temperatursensoren (24, 26) jeweils auf dem zugeordneten, geschwärzten Bereich(20, 22) aufgebracht, beispielsweise aufgeklebt, sind.

3. Anordnung nach Anspruch 1 oder 2, **dadurch gekennzeichnet, daß** eine weitere, dritte Fläche (30) vorgesehen ist, deren Oberfläche (32) dem Fahrzeuginnenraum zugewandt und somit der Sonneneinstrahlung nicht ausgesetzt ist und der ein weiterer Temperatursensor (36) zugeordnet ist.

4. Anordnung nach Anspruch 3, **dadurch gekennzeichnet, daß** die dritte Fläche (30) eine reflektierende Oberfläche (34) aufweist.

5. Anordnung nach einem der vorhergehenden Ansprüche, **dadurch gekennzeichnet, daß** die Flächen (12, 14, 30) in Form einer dreiseitigen Pyramide angeordnet sind.

6. Instrumententafel eines Kraftfahrzeuges mit einer Anordnung (10) nach einem der vorhergehenden Ansprüche, **dadurch gekennzeichnet, daß** die Anordnung (10) einen integralen Bestandteil der Instrumententafel (40) bildet und die Oberflächen (16, 18, 32) Teil der Instrumententafeloberfläche bilden.

7. Instrumententafel nach Anspruch 6, **dadurch gekennzeichnet, daß** die Anordnung (10) aus der Instrumententafel (40) hervorsteht.

8. Instrumententafel nach Anspruch 6, **dadurch gekennzeichnet, daß** die Anordnung (10) in der Instrumententafel (40) versenkt angeordnet ist.

9. Klimaanlage mit einer Anordnung und/oder einer Instrumententafel gemäß zumindest einem der vorhergehenden Ansprüche.

10. Kraftfahrzeug mit einer Klimaanlage gemäß Anspruch 9.

## Claims

1. System for detecting the direction and intensity of insolation (arrows 467 48, 50, 52) in order to control an air-conditioning system of a vehicle, having at least two faces assigned respectively to the left-hand and right-hand vehicle side with sensor elements (24 and 26) disposed one on each of the faces (12 and 14) so that the surfaces (16 and 18) of the faces (12 and 14) can be at least partially exposed to the incidental solar irradiation (46,48 and 50, 52) from the left-hand and right-hand vehicle side, **characterised in that** the sensor elements (24 and 26) are provided in the form of temperature sensors (24 and 26) and each is joined to the face (12, 14) of its assigned surface (16, 18), which at least substantially absorbs the incident solar irradiation (46, 48 and 50, 52) to which it is exposed, in a heat-conducting arrangement so that the temperature sensors measure the temperatures of the surfaces absorbing the solar insolation.

2. System as claimed in claim 1, **characterised in that** the surfaces (16 and 18) are blackened in at least one region (20 and 22) and the temperature sensors (24, 26) are mounted respectively on the assigned blackened region (20, 22), for example adhered thereto.

3. System as claimed in claim 1 or 2, **characterised in that** another, third face (30) is provided, the surface (32) of which is directed towards the vehicle interior and therefore not exposed to insolation, and another temperature sensor (36) is assigned to it.

4. System as claimed in claim 3, **characterised in that** the third face (30) has a reflective surface (34).

5. System as claimed in one of the preceding claims, **characterised in that** the faces (12, 14, 30) are disposed in the shape of a three-sided pyramid.

6. Dashboard of a motor vehicle incorporating a system (10) as claimed in one of the preceding claims, **characterised in that** the system (10) constitutes an integral part of the dashboard (40) and the surfaces (16, 18, 32) form part of the dashboard surface.

7. Dashboard as claimed in claim 6, **characterised in that** the system (10) stands proud of the dashboard (40).

8. Dashboard as claimed in claim 6, **characterised in that** the system (10) is recessed in the dashboard (40).

9. Air conditioning system incorporating a system and/or a dashboard as claimed in at least one of the preceding claims.

10. Motor vehicle fitted with an air conditioning system as claimed in claim 9.

## Revendications

1. Dispositif servant à déterminer la direction et l'intensité du rayonnement solaire (flèches 46, 48, 50, 52) pour la commande d'un système de climatisation d'un véhicule, comprenant au moins deux surfaces associées, respectivement, au côté gauche et au côté droit du véhicule, et des éléments de capteur (24 et 26) qui sont disposés, respectivement, sur l'une des surfaces (12 et 14), où les surfaces (16 et 18) des surfaces (12 et 14) peuvent être au moins partiellement sollicitées par le rayonnement solaire (46, 48 ou 50, 52) irradiant, respectivement, par le côté gauche ou par le côté droit du véhicule,
**caractérisé en ce que** les éléments (24 et 26) du capteur sont configurés comme des capteurs de températures (24 et 26) et sont, respectivement, en liaison thermoconductrice avec les surfaces (16, 18) des surfaces (12, 14) associées à ces éléments, lesquelles surfaces absorbent au moins en majeure partie le rayonnement solaire (46, 48 ou 50, 52) incident sur ces surfaces, de sorte que les capteurs de températures mesurent les températures des surfaces absorbant le rayonnement solaire.

2. Dispositif selon la revendication 1, **caractérisé en ce que** les surfaces (16 et 18) sont noircies au moins dans une zone (20 ou 22), et les capteurs de températures (24, 26) sont appliqués, par exemple collés, respectivement sur la zone associée (20, 22) noircie.

3. Dispositif selon la revendication 1 ou 2, **caractérisé en ce qu'**il est prévu une autre - à savoir une troisième - surface (30) dont la surface (32) est tournée vers l'habitacle du véhicule et, par conséquent, n'est pas exposée au rayonnement solaire, et un autre capteur de températures (36) est associé à cette surface.

4. Dispositif selon la revendication 3, **caractérisé en ce que** la troisième surface (30) présente une surface réfléchissante (34).

5. Dispositif selon l'une quelconque des revendications précédentes, **caractérisé en ce que** les surfaces (12, 14, 30) sont disposées en ayant la forme d'une pyramide à trois côtés.

6. Tableau de bord d'un véhicule automobile comprenant un dispositif (10) selon l'une quelconque des revendications précédentes, **caractérisé en ce que** le dispositif (10) forme un composant intégré au tableau de bord (40), et les surfaces (16, 18, 32) font partie de la surface du tableau de bord.

7. Tableau de bord selon la revendication 6, **caractérisé en ce que** le dispositif (10) dépasse du tableau de bord (40).

8. Tableau de bord selon la revendication 6, **caractérisé en ce que** le dispositif (10) est disposé en étant encastré dans le tableau de bord (40).

9. Système de climatisation comprenant un dispositif et/ou un tableau de bord selon au moins l'une quelconque des revendications précédentes.

10. Véhicule automobile comprenant un système de climatisation selon la revendication 9.
